# EUROPEAN PATENT APPLICATION

(11) **EP 4 223 821 A1**
(43) Date of publication of application: **09.08.2023**
(21) Application number: 22154900.9
(22) Date of filing: 03.02.2022
(51) Int. Cl.: C08G 18/32, C07C 263/00, C07C 273/00, C08G 18/64, C08G 18/71, C09D 163/00, C08G 18/28, C08G 18/73, C08G 18/78

(54) **NOVEL EPOXY-URETHANE COMPOUNDS AND THEIR THERMOSETTING POLYMERS**

(71) Applicant: Covestro LLC, Pittsburgh, PA 15205 (US)
(72) Inventor: The designation of the inventor has not yet been filed
(74) Representative: Levpat

(57) **Abstract**

Provided is an epoxy-functional polyurethane comprising a reaction product of (A) a polyisocyanate; and (B) a compound, HX-Y-(Z)ₙ wherein, X is O, N, or S, Y is a linear or branched C₁-C₁₅ alkyl group, and Z is -CH=CDE or Z is -F-O-G-CH=CDE, n is an integer from 1 to 3, wherein D and E independently are selected from H, a linear C₁-C₅ alkyl group, and a branched C₁-C₅ alkyl group, F and G independently are selected from H, linear or branched C₁-C₁₅ alkyl groups, and wherein compound (B) comprises a vinyl group capable of being oxidized to a corresponding epoxy group. Also provided is a process for producing an epoxy-functional polyurethane, the process comprising (1) reacting (A) a polyisocyanate; and (B) a compound: HX-Y-(Z)ₙ wherein, X is O, N, or S, Y is a linear or branched C₁-C₁₅ alkyl group, and Z is -CH=CDE or Z is -F-O-G-CH=CDE, n is an integer from 1 to 3, wherein D and E independently are selected from H, a linear C₁-C₅ alkyl group, and a branched C₁-C₅ alkyl group, F and G independently are selected from H, linear or branched C₁-C₁₅ alkyl groups, optionally, in the presence of a catalyst to form a vinyl-functional carbamate; (2) forming a mixture containing the vinyl-functional carbamate, a ketone, water, and a base; and (3) feeding an aqueous solution of oxone into the mixture to oxidize the vinyl-functional carbamate to the epoxy-functional polyurethane. The epoxy-functional polyurethanes of the invention may find use in or as coatings, adhesives, sealants, films, elastomers, castings, foams, and composites.

## Description

### FIELD OF THE INVENTION

The present invention relates in general to polymers, and more specifically, to epoxy-urethane resins having a polyurethane backbone with epoxy-functional groups attached.

### BACKGROUND OF THE INVENTION

High performance paint and coating systems are needed for many applications ranging from aircraft, ships, chemical plants, flooring, bridges, and many others. Although there are many coatings binder systems available, the two most prominent are epoxy coatings and polyurethane coatings.

Epoxy resin systems are often used as primers because they provide good adhesion to most substrates and provide a barrier for anticorrosion. A typical epoxy system involves a bisphenol-A (BPA) based epoxy resin that is cured with a multifunctional amine curing agent. Typically, liquid BPA epoxy resins are used such as EPON 828 (Hexion) or DER 331 (Olin Chemicals). Amine curing agents can be simple compounds such as bis(p-amino cyclohexyl) methane (PACM), isophorone diamine (IPDA) or more complex amine compounds such as polyamide resins, polyamidoamine resins, polyphenalkamine resins, or epoxy resin adducts. Because the reactions between the amine curing agent and the epoxy resin start as soon as the two ingredients are mixed, these materials are provided separately as two-component systems (2K) and are mixed just prior to application. The time after mixing the components during which the coating can still be applied is known as the "pot life." Sometimes the pot life is defined as the time for the viscosity to double; however, the pot life for any given coating system is that time where the viscosity is suitable for application. More information about epoxy resin technology can be found in various reference materials including B. Ellis, ed., "Chemistry and Technology of Epoxy Resins", Springer Science, 1993; H. Panda, "Epoxy Resins Technology Handbook", 2nd Revised Edition, Asia Pacific Business Press, 2019; C. May, "Epoxy Resins: Chemistry and Technology", 2nd Edition, Routledge, 2018.

In addition to amines, epoxy resins also react with themselves (homopolymerization), anhydrides, phenols, and/or thiols. An epoxy formulation may contain multiple different kinds of curing agents as well as the right conditions for homopolymerization.

Polyurethane coatings represent a class of high-performance systems that can be used for a number of different applications. Polyurethanes are highly desired for their durability, toughness, and abrasion resistance, which is believed to be a result of extensive hydrogen bonding. Two component (2K) polyurethane coatings involve the reaction of a polyol with a polyisocyanate. As with epoxy resins, the curing reactions start as soon as the components are mixed; therefore, the coating system is supplied in two packages that are mixed just prior to application. The polyol can be an acrylic polyol, a polyester polyol, a polyether polyol, a polyurethane polyol, or a polycarbonate polyol. The polyisocyanate component can be based on aromatic or aliphatic building blocks. Aromatic polyisocyanates react very rapidly, although aliphatic polyisocyanates react slower; however, it is possible to accelerate the curing with the use of catalysts. Aliphatic polyisocyanates are preferred for use where the coating requires weathering performance. More information about polyurethanes and their use in coatings can be found in various reference materials including "Szycher's Handbook of Polyurethanes", 2nd edition, CRC Press, 2012; U. Meier-Westhues, "Polyurethanes: Coatings, Adhesives and Sealants", Vincentz Network, 2007.

However, due to concerns about exposure to isocyanates, there is a desire to be able to make polyurethanes without using isocyanates at the point of application. A number of approaches have been explored including cyclic carbonate-amine chemistry and carbamate-aldehyde chemistry, among others (Polym. Bull. 2019, 76 (6), 3233-3246; ChemSusChem 2019, 12 (15), 3410-3430; Eur. Polym. J. 2017, 87, 535-552; RSC Adv. 2013, 3 (13), 4110-4129; Polymer. Adv. Tech. 2015, 26 (7), 707-761).

In making new coatings systems, it is desirable to maintain the polyurethane character as the hydrogen bonding it affords imparts significant toughness, durability, and abrasion resistance. Therefore, a system that results in crosslinked polyurethane materials, but uses a different crosslinking chemistry is desirable.

As described previously, epoxy chemistry is well known and used extensively in the field of thermosetting materials for applications in coatings, composites, and adhesives. Having an epoxy-functional polyurethane can meet this need.

One approach to making epoxy-functional polyurethanes is that of glycidyl carbamate-functional resins. Glycidyl carbamate-functional resins are made by reacting isocyanate-functional resins with glycidol.

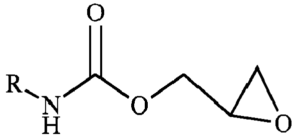

Glycidyl carbamates are typically synthesized by the reaction of a polyisocyanate with glycidol. In U.S. Pat. No. 2,830,038, Pattison discloses the synthesis of linear epoxy urethane compounds by the reaction of polytetramethylene ether glycol with an excess of toluene-2,4-diisocyanate (TDI), followed by reaction with glycidol. The product is mixed with a diamine and cured to form an elastomer.

Doss, in U.S. Pat. No. 3,440,230, teaches the synthesis of a glycidyl carbamate resin by the reaction of a mixture of 2,4- and 2,6-toluene diisocyanate (TDI) with glycidol. The product can be cured at elevated temperature (180 °C for 30 min.) between aluminum strips and forms an adhesive. Pittman et al. disclose glycidol-modified polyurethanes as treatments for textiles in U.S. Pat. No. 3,814,578. To prepare the glycidol-modified polyurethane, an isocyanate-terminated prepolymer was reacted with glycidol. The product is applied to a fabric either from solvent or as an aqueous emulsion and cured.

Several researchers have studied the rearrangement reactions of glycidyl carbamates. In an early report, Iwakura and Taneda indicated that N-substituted phenyl glycidyl carbamate would rearrange at elevated temperatures to 3-phenyl-5-hydroxytetrahydro-1,3-oxazin-2-one (J. Org. Chem, 24, 1992 (1959)). However, Farrisey and Nashu showed that, when catalyzed by a tertiary amine, phenyl glycidyl carbamate rearranges at elevated temperatures to 3-phenyl-4-hydroxymethyl-2-oxazolidones (J. Heterocyl. Chem., 7, 331-333 (1970)).

The group of Chen et al. reported the synthesis of glycidol-terminated polyurethanes (glycidyl carbamates) and found that they had good adhesion at low temperatures as well as good storage stability and room temperature curing (J. Appl. Polym. Sci., 51, 1199-1206 (1994)). A subsequent study showed that the glycidol-terminated polyurethanes had better impact strength, fracture energy, and adhesion than a conventional epoxy resin (J. Appl. Polym. Sci., 52, 1137-1151 (1994). In EP 0553701 A2, Rehfuss, et al. reported a coating system made from reacting a polyisocyanate with glycidol to form the glycidyl carbamate resin and then curing it with a polyfunctional acid compound. Yeganeh et al. synthesized biodegradable epoxy terminated polyurethanes by end-capping of isocyanate terminated prepolymers with glycidol which were then cured with diamines to make thermosets (Eur. Polym. J. 41, 2370-2379 (2005); J. Polym. Sci. A Polym. Chem. 43, 2985-2006 (2005)). Yeganeh et al. also studied polyurethane elastomers made from isocyanate terminated prepolymers capped with glycidol that were cured with a polyamic acid to form crosslinked elastomers (J. Appl. Polym. Sci. 103, 1776-1785 (2007)). Yeganeh et al. also studied the curing of epoxy polyurethanes using a novel phenolic functionalized polyamide resin (High Perƒ. Polym. 20, 126-145 (2008)). Solouck et al. synthesized isocyanate terminated prepolymers from difunctional polyols and diisocyanates that were then endcapped with glycidol. These were then cured with diamines to form crosslinked elastomers (Iran. J. Pharma. Sci., 4, 281-288 (2008)). Sun et al. studied the kinetics of the reaction of glycidol with isocyanate terminated prepolymers from aromatic and cycloaliphatic diisocyanates. The epoxy urethane terminated polymers were mixed with conventional BPA epoxy resins and cured and their underwater acoustic properties were studied (Polym. Bull. 69, 621-633 (2012)).

In a series of investigations, Webster et al. studied the synthesis of glycidyl carbamate-functional resins made from the reaction of glycidol with multifunctional polyisocyanates derived from 1,6-hexamethylene diisocyanate (HDI). In one paper, the synthesis of multifunctional resins and their curing with amines to form coatings was studied (JCT Research, 2, 517-528 (2005)). In another paper, the self-crosslinking reaction at elevated temperature was studied as were the properties of coatings cured with the self-crosslinking reaction (Prog. Org. Coat., 57, 128-139(2006)). It was also shown that modification of the polyisocyanates with monofunctional alcohols, followed by reaction with glycidol could be used to moderate the viscosity of the resins. The resulting products could be cured with amines or through self-crosslinking to form coatings (J. Coat. Tech. & Res., 7, 531-546 (2010); U.S. Pat. Nos. 9,051,413; and 9,593,258). Webster et al., also demonstrated in U.S. Pat. No. 8,852,458 that polyfunctional glycidyl-carbamate resins could be blended with conventional BPA epoxy resins to form corrosion resistant coatings. Glycidyl carbamate-functional resins could be rendered water dispersible by partial replacement of glycidol with polyethylene glycol and cured using waterborne amine curing agents (J. Coat. Tech. Res., 6, 735-747 (2011); U.S. Pat. Nos. 7,776,956; and 9,676,895). To make highly flexible coatings linear glycidyl carbamate resins can be made and cured with amines (J. Coat. Tech. Res., 10(2), 141-151 (2012)). Hybrid sol-gel systems can also be synthesized by reactions with various silanes (Prog. Org. Coat., 66(1), 73-85 (2009); Prog. Org. Coat., 64(2-3) 128-137 (2009); Prog. Org. Coat., 63(4) 405-415 (2008); U.S. Pat. No. 8,097,741).

All these glycidyl carbamate resins are synthesized by reacting an isocyanate-functional material with glycidol. However, glycidol is very expensive and has various health hazards associated with it.

Using another approach to the synthesis of epoxy-functional polyurethane resins, Ambrose et al., in U.S. Pat. Nos. 4,699,814; and 4,749,743, report the reaction of isocyanate-functional compounds with a hydroxyl-functional polyepoxide having 2 or more epoxy groups per molecule. An example of a hydroxyl-functional polyepoxide is a diglycerol polyglycidyl ether having three epoxy groups per molecule.

Therefore, a need exists in the art for a new approach to the synthesis of epoxy-functional polyurethanes that does not make use of glycidol and which results in epoxy-functional urethanes with novel compositions.

### SUMMARY OF THE INVENTION

Accordingly, the present invention reduces or obviates problems inherent in the art by providing epoxy-urethane resins having a polyurethane backbone with epoxy-functional groups attached. These resins are synthesized by reaction of (A) a polyisocyanate; and (B) a compound: HX-Y-(Z)ₙ wherein, X is O, N, or S, Y is a linear or branched C₁-C₁₅ alkyl group, and Z is -CH=CDE or Z is -F-O-G-CH=CDE, n is an integer from 1 to 3, wherein D and E independently are selected from H, a linear C₁-C₅ alkyl group, and a branched C₁-C₅ alkyl group, F and G independently are selected from H, linear or branched C₁-C₁₅ alkyl groups, and wherein compound (B) comprises a vinyl group which is capable of being oxidized to a corresponding epoxy group.

The resins of the invention may be cured with amines under ambient or elevated temperatures or undergo self-cure with heat. The cured materials can be used for the production of coatings, adhesives, sealants, films, elastomers, castings, foams, and composites.

These and other advantages and benefits of the present invention will be apparent from the Detailed Description of the Invention herein below.

### BRIEF DESCRIPTION OF THE FIGURES

The present invention will now be described for purposes of illustration and not limitation in conjunction with the figures, wherein:
FIG. 1 is a diagram of the synthetic route to produce POLYISO A-EPOXY A RESIN;
FIG. 2 is the synthetic route to produce POLYISO B-EPOXY A RESIN;
FIG. 3 is the¹³C NMR spectra of POLYISO A-ALLYL ETHER A CARBAMATE and POLYISO A-EPOXY A RESIN;
FIG. 4 is the FTIR spectra of POLYISO A-ALLYL ETHER A CARBAMATE and POLYISO A-EPOXY A RESIN;
FIG. 5 is the ¹³C NMR spectra of POLYISO B-ALLYL ETHER A CARBAMATE and POLYISO B-EPOXY A RESIN from EX. 2;
FIG. 6 is the ATR-FTIR spectra of POLYISO B-ALLYL ETHER A CARBAMATE and POLYISO B-EPOXY A RESIN;
FIG. 7 is a diagram of the synthetic route to produce POLYISO B-EPOXY B RESIN;
FIG. 8 is the ¹³C NMR spectra of POLYISO B-ALLYL ETHER B CARBAMATE and POLYISO B-EPOXY B RESIN; and
FIG. 9 is the ATR-FTIR spectra of POLYISO B-ALLYL ETHER B CARBAMATE and POLYISO B-EPOXY B RESIN.

### DETAILED DESCRIPTION OF THE INVENTION

The present invention will now be described for purposes of illustration and not limitation. Except in the operating examples, or where otherwise indicated, all numbers expressing quantities, percentages, and so forth in the specification are to be understood as being modified in all instances by the term "about."

Any numerical range recited in this specification is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited in this specification is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such sub-ranges would comply with the requirements of 35 U.S.C. §112(a), and 35 U.S.C. §132(a). The various embodiments disclosed and described in this specification can comprise, consist of, or consist essentially of the features and characteristics as variously described herein.

Any patent, publication, or other disclosure material identified herein is incorporated by reference into this specification in its entirety unless otherwise indicated, but only to the extent that the incorporated material does not conflict with existing definitions, statements, or other disclosure material expressly set forth in this specification. As such, and to the extent necessary, the express disclosure as set forth in this specification supersedes any conflicting material incorporated by reference herein. Any material, or portion thereof, that is said to be incorporated by reference into this specification, but which conflicts with existing definitions, statements, or other disclosure material set forth herein, is only incorporated to the extent that no conflict arises between that incorporated material and the existing disclosure material. Applicant reserves the right to amend this specification to expressly recite any subject matter, or portion thereof, incorporated by reference herein.

Reference throughout this specification to "various non-limiting embodiments," "certain embodiments," or the like, means that a particular feature or characteristic may be included in an embodiment. Thus, use of the phrase "in various non-limiting embodiments," "in certain embodiments," or the like, in this specification does not necessarily refer to a common embodiment, and may refer to different embodiments. Further, the particular features or characteristics may be combined in any suitable manner in one or more embodiments. Thus, the particular features or characteristics illustrated or described in connection with various or certain embodiments may be combined, in whole or in part, with the features or characteristics of one or more other embodiments without limitation. Such modifications and variations are intended to be included within the scope of the present specification.

The grammatical articles "a", "an", and "the", as used herein, are intended to include "at least one" or "one or more", unless otherwise indicated, even if "at least one" or "one or more" is expressly used in certain instances. Thus, these articles are used in this specification to refer to one or more than one (i.e., to "at least one") of the grammatical objects of the article. By way of example, and without limitation, "a component" means one or more components, and thus, possibly, more than one component is contemplated and may be employed or used in an implementation of the described embodiments. Further, the use of a singular noun includes the plural, and the use of a plural noun includes the singular, unless the context of the usage requires otherwise.

The present invention is directed to an entirely new approach to the synthesis of epoxy-functional polyurethanes that does not make use of glycidol, in which the epoxy group and the carbamate group are separated by more than one atom. This approach also results in epoxy-functional urethanes with novel compositions.

The synthesis method involves a first reaction of an isocyanate-functional compound with a compound containing a hydroxyl group and one or more vinyl groups. Next, the vinyl groups are oxidized to convert the double bonds to epoxy groups as shown below.

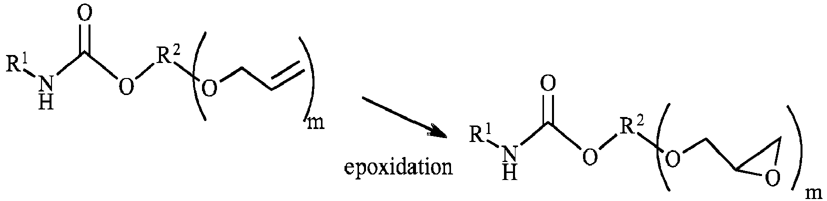

There are a number of approaches in the art for converting double bonds into epoxy groups. One of the more common approaches is to use m-chloroperbenzoic acid, which reacts directly with a carbon-carbon double bond to convert it to the corresponding epoxide *(*J. Am. Chem. Soc., 120, 9513-9516 (1998)). However, the by-product of the reaction is m-chlorobenzoic acid in stoichiometric amounts, which creates significant waste.

An alternative method for epoxidizing olefins involves dioxirane, which can be generated *in situ* from the reaction of a ketone with potassium peroxymonosulfate, also known as potassium caroate or oxone *(*J. Org. Chem. 45, 4758-4760 (1980)). This method has been found to be useful in epoxidizing a number of different types of carbon-carbon double bonds (Org. Process Res. Dev., 6, 405-406 (2002); ACS Sustain. Chem. Eng., 6, 5115-5121 (2018)).

Thus, in a first aspect, the invention is directed to an epoxy-functional polyurethane comprising a reaction product of (A) a polyisocyanate; and (B) a compound: HX-Y-(Z)ₙ wherein, X is O, N, or S, Y is a linear or branched C₁-C₁₅ alkyl group, and Z is - CH=CDE or Z is -F-O-G-CH=CDE, n is an integer from 1 to 3, wherein D and E independently are selected from H, a linear C₁-C₅ alkyl group, and a branched C₁-C₅ alkyl group, F and G independently are selected from H, linear or branched C₁-C₁₅ alkyl groups, and wherein compound (B) comprises a vinyl group capable of being oxidized to a corresponding epoxy group.

In a second aspect, the invention is directed to a process for producing an epoxy-functional polyurethane, the process comprising (1) reacting (A) a polyisocyanate; and (B) a compound: HX-Y-(Z)ₙ wherein, X is O, N, or S, Y is a linear or branched C₁-C₁₅ alkyl group, and Z is -CH=CDE or Z is -F-O-G-CH=CDE, n is an integer from 1 to 3, wherein D and E independently are selected from H, a linear C₁-C₅ alkyl group, and a branched C₁-C₅ alkyl group, F and G independently are selected from H, linear or branched C₁-C₁₅ alkyl groups, optionally, in the presence of a catalyst to form a vinyl-functional carbamate; (2) forming a mixture containing the vinyl-functional carbamate, a ketone, water, and a base; and (3) feeding an aqueous solution of oxone into the mixture to oxidize the vinyl-functional carbamate to the epoxy-functional polyurethane.

In a third aspect, the present invention is directed to one of a coating, an adhesive, a sealant, a film, an elastomer, a casting, a foam, and a composite comprising the epoxy-functional polyurethane according to one of the previous two aspects.

As used herein, the term "polymer" encompasses prepolymers, oligomers, and both homopolymers and copolymers; the prefix "poly" in this context refers to two or more. As used herein, the term "molecular weight", when used in reference to a polymer, refers to the number average molecular weight, unless otherwise specified.

As used herein, the term "polyol" refers to compounds comprising at least two free hydroxyl groups. Polyols include polymers comprising pendant and terminal hydroxyl groups.

As used herein, the term "coating composition" refers to a mixture of chemical components that will cure and form a coating when applied to a substrate.

The terms "adhesive" or "adhesive composition" refer to any substance that can adhere or bond two items together. Implicit in the definition of an "adhesive composition" or "adhesive formulation" is the concept that the composition or formulation is a combination or mixture of more than one species, component or compound, which can include adhesive monomers, oligomers, and polymers along with other materials.

A "sealant" or "sealant composition" refers to a composition which may be applied to one or more surfaces to form a protective barrier, for example to prevent ingress or egress of solid, liquid or gaseous material or alternatively to allow selective permeability through the barrier to gas and liquid. In particular, it may provide a seal between surfaces.

A "casting" or "casting composition" refers to a mixture of liquid chemical components which is usually poured into a mold containing a hollow cavity of the desired shape, and then allowed to solidify.

A "composite" or "composite composition" refers to a material made from one or more polymers, containing at least one other type of material (e.g., a fiber) which retains its identity while contributing desirable properties to the composite. A composite has different properties from those of the individual polymers/materials which make it up.

The terms "cured," "cured composition" or "cured compound" refer to components and mixtures obtained from reactive curable original compound(s) or mixture(s) thereof which have undergone chemical and/or physical changes such that the original compound(s) or mixture(s) is(are) transformed into a solid, substantially non-flowing material. A typical curing process may involve crosslinking.

The term "curable" means that an original compound(s) or composition material(s) can be transformed into a solid, substantially non-flowing material by means of chemical reaction, crosslinking, radiation crosslinking, or the like. Thus, compositions of the invention are curable, but unless otherwise specified, the original compound(s) or composition material(s) is(are) not cured.

The components useful in the present invention comprise a polyisocyanate. As used herein, the term "polyisocyanate" refers to compounds comprising at least two unreacted isocyanate groups, such as three or more unreacted isocyanate groups. The polyisocyanate may comprise diisocyanates such as linear aliphatic polyisocyanates, aromatic polyisocyanates, cycloaliphatic polyisocyanates and aralkyl polyisocyanates.

Suitable polyisocyanates include aromatic, araliphatic, aliphatic or cycloaliphatic di- and/or polyisocyanates and mixtures thereof. In certain aspects, the polyisocyanate may comprise a diisocyanates of the formula

R(NCO)₂

wherein R represents an aliphatic hydrocarbon residue having 4 to 12 carbon atoms, a cycloaliphatic hydrocarbon residue having 6 to 15 carbon atoms, an aromatic hydrocarbon residue having 6 to 15 carbon atoms or an araliphatic hydrocarbon residue having 7 to 15 carbon atoms.

In a first step, an isocyanate-functional compound is reacted with a compound containing a hydroxyl group and a vinyl group to form a vinyl-functional carbamate. Although any isocyanate compound can be used, it is preferred to use isocyanate compounds that have two or more isocyanate groups, so that the final epoxy-functional carbamate composition can be cured into a thermoset material. Example diisocyanate compounds include 1,6-hexamethylene diisocyanate, 2,4-toluene diisocyanate, 2,6-toluene diisocyanate and mixtures thereof, methylene diphenyl diisocyanate, isophorone diisocyanate, bis(4-isocyanatocyclohexyl) methane, tetramethylxylene diisocyanate, xylylene diisocyanate, hydrogenated xylylene diisocyanate, 2,2,4 and 2,4,4,- trimethyl-1,6-hexamethylene diisocyanate, and 4-isocyanatomethyl-1,8-octane diisocyanate. Polyisocyanate compounds can also be used including the biuret and isocyanurate adducts of diisocyanates, polyisocyanates made by reacting a polyol with a diisocyanate, uretdione adducts, and allophanate polyisocyanates.

Another type of polyisocyanate that can be used is prepared by the free radical copolymerization of a compound containing an isocyanate and a carbon-carbon double bond that can be polymerized using a free radical chain growth polymerization. Examples are m-TMI (α,α-dimethyl meta-isopropenyl benzyl isocyanate) and isocyanato ethyl methacrylate (IEM). These monomers can be combined with others in a copolymerization to yield a polymer having multiple isocyanate groups.

Suitable as compound B include, but are not limited to, the following, trimethylolpropane diallyl ether, ethylene glycol monoallyl ether, 3-butene-1-ol, 4-pentene-1-ol, 4-methyl-3-pentene-1-ol, 5-hexene-1-ol, 4-hexene-1-ol, 3-hexene-1-ol, 4-methyl-3-hexene-1-ol, 2-ethyl-4-pentene-1-ol, oleyl alcohol, and the like.

The first step can occur in the absence or presence of solvent and in the absence of presence of a catalyst. Suitable solvents include, but are not limited to, toluene, xylenes, n-butyl acetate, t-butyl acetate, amyl acetate, acetone, methyl ethyl ketone, methyl amyl ketone, dihydrolevoglucosenone (CYRENE), N-methyl 2-pyrrolidone, N-ethyl-2-pyrrolidone, tetrahydrofuran, diethyl ether, dimethylsulfoxide, dimethyl formamide, and dimethylacetamide. It is preferred that the reaction occurs in the absence of solvent, or, if solvent is needed due to viscosity, to use a solvent that can be readily removed after the reaction is complete.

Optional catalysts for the reaction include tin compounds such as dibutyl tin dilaurate, dibutyl tin diacetate, tertiary amines such as 1,4-diazabicyclo[2.2.2]octane (DABCO) and other metal salts based on bismuth, iron, zirconium, or zinc. It is preferred to carry out the reaction without a catalyst or with a tin-based catalyst.

After reacting the isocyanate, step two, involving oxidation of the double bond to an epoxide occurs. This reaction is a two-phase (biphasic) system. The vinyl-functional carbamate synthesized in step one is dissolved in a solvent. Preferably, the solvent is a ketone so that it can function as the source of ketone for the formation of the dioxirane. Solvents such as acetone, methyl ethyl ketone, methyl amyl ketone, and cyclohexanone can be used, with acetone being the preferred solvent. A mixture of a ketone and another solvent may also be used. Suitable solvents are those listed above for the isocyanate-allyl alcohol reaction.

A base in the aqueous phase serves to maintain basic conditions needed to stabilize the dioxirane. Inorganic bases such as sodium hydrogen carbonate (sodium bicarbonate), sodium hydroxide, sodium carbonate, potassium bicarbonate, potassium carbonate, potassium hydroxide, and the like can be used. Sodium bicarbonate is preferred. The biphasic reaction mixture is stirred vigorously to create interfacial surface area between the organic and aqueous phases. Oxone is dissolved in water and added slowly to the reaction mixture. A slow addition rate is preferred to yield the highest conversion of vinyl groups to epoxy groups. The reaction can occur at temperatures ranging from 2 °C to 90 °C. Ambient temperature of 18 °C to -25 °C is preferred.

Optionally, a phase transfer catalyst can be used. Suitable phase transfer catalysts include tetrabutyl ammonium hydrogen sulfate, quaternary ammonium compounds such as benzyl triethyl ammonium chloride, and the like. Ionic liquids can also function as phase transfer compounds such as 1-dodecyl-3-methylimidazolium tetrafluoroborate (DoDMIImBF₄). Crown ethers such as 18-crown-6 can also be used as a phase transfer catalyst.

After completion of the reaction, an organic solvent is added to extract the product from the reaction mixture and the organic and aqueous layers are allowed to separate. The organic layer is washed several times with aqueous sodium chloride and separated from the aqueous layer and the solvent is removed by evaporation to yield the vinyl carbamate resin.

In various embodiments, the compositions of the present invention may be used to provide coatings, adhesives, sealants, films, elastomers, castings, foams, and composites. Curing of the coatings, adhesives, sealants, films, elastomers, castings, foams, and composites of the invention may occur at ambient conditions or at elevated temperatures with a multifunctional amine curing agent or a curing agent reactive towards epoxy and, optionally, catalysts, solvents, additives, and pigments.

Suitable amine curing agents are those which are soluble or miscible in a coating composition of the invention. Amine curing agents known in the art include, for example, diethylenetriamine, triethylenetetramine, tetraethylene-pentamine, etc. as well as 2,2,4- and/or 2,4,4-trimethylhexamethylenediamine, 1,2- and 1,3-diaminopropane, 2,2-dimethylpropylenediamine, 1,4-diaminobutane, 1,6-hexanediamine, 1,7-diaminoheptane, 1,8-diaminooctane, 1,9-diaminononae, 1,12-diaminododecane, 4-azaheptamethylenediamine, N,N"-bis(3-aminopropyl)butane-1,4-diamine, 1-ethyl-1,3-propanediamine, 2,2(4),4-trimethyl-1,6-hexanediamin, bis(3-aminopropyl)piperazine, N-aminoethylpiperazine, N,N-bis(3-aminopropyl)ethylenediamine, 2,4(6)-toluenediamine, dicyandiamine, melamine formaldehyde, tetraethylenepentamine, 3-diethylaminopropylamine, 3,3"-iminobispropylamine, tetraethylenepentamine, 3-diethylaminopropylamine, and 2,2,4- and 2,4,4-trimethylhexamethylenediamine. Exemplary cycloaliphatic amine curing agents include, but are not limited to, 1,2- and 1,3-diaminocyclohexane, 1,4-diamino-2,5-diethylcyclohexane, 1,4-diamino-3,6-diethylcyclohexane, 1,2-diamino-4-ethylcyclohexane, 1,4-diamino-2,5-diethylcyclo-hexane, 1,2-diamino-4-cyclohexylcyclohexane, isophorone-diamine; norbornanediamine; 4,4'-diaminodicyclohexylmethane, 4,4'-diaminodicyclohexylethane, 4,4'-diaminodicyclohexylpropane, 2,2-bis(4-aminocyclohexyl)propane, 3,3'-dimethyl-4,4'-diaminodicyclohexylmethane, 3-amino-1-(4-aminocyclohexyl)propane, 1,3- and 1,4-bis(aminomethyl)cyclohexane, and 1-cyclohexyl-3,4-dimino-cyelohexane. As exemplary araliphatic amines, in particular those amines are employed in which the amino groups are present on the aliphatic radical for example m- and p-xylylenediamine or their hydrogenation products as well as diamide diphenylmethane, diamide diphenylsulfonic acid (amine adduct), 4,4"-methylenedianiline, 2,4-bis(p-aminobenzyl)aniline, diethyltoluenediamine, and m-phenylene diamine. The amine curing agents may be used alone or as mixtures.

Suitable amine-epoxide adducts are, for example, reaction products of diamines such as, for example, ethylenediamine, diethylenetriamine, triethylenetetramine, m-xylylenediamine and/or bis(aminomethyl)cyclohexane with terminal epoxides such as, for example, polyglycidyl ethers of polyhydric phenols listed above.

Preferably, amine curing agents used with the coating formulations of the invention are PACM (bis(para-aminocyclohexyl)methane), diethylene triamine (DETA), and 4,4'-methylene dianiline (MDA). Stoichiometry ratios of amine to oxirane of the coating compositions may be based on amine hydrogen equivalent weight (AHEW) and on weight per epoxide (WPE). A formulation of 1:1 was based on one epoxide reacted with one amine active hydrogen.

Solvents can be used in the formulation of the thermosets. Suitable solvents can include toluene, xylenes, n-butyl acetate, t-butyl acetate, amyl acetate, acetone, methyl ethyl ketone, methyl amyl ketone, dihydrolevoglucosenone (CYRENE), N-methyl 2-pyrrolidone, N-ethyl-2-pyrrolidone, ethyl ethoxy propionate, tetrahydrofuran, diethyl ether, dimethylsulfoxide, dimethyl formamide, and dimethylacetamide.

Coatings, adhesives, sealants, films, elastomers, castings, foams, and composites compositions of the invention may further contain at least one additive to, for example, enhance the composition's efficiency. Examples of suitable coating additives include, but are not limited to, leveling and flow control agents such as silicones, fluorocarbons or cellulosics; extenders; plasticizers; flattening agents; pigment wetting and dispersing agents; ultraviolet (UV) absorbers; UV light stabilizers; defoaming and antifoaming agents; anti-settling, anti-sag and bodying agents; anti-skinning agents; anti-flooding and anti-floating agents; and corrosion inhibitors. Specific examples of such additives can be found in Raw Materials Index, published by the National Paint & Coatings Association, 1500 Rhode Island Avenue, N.W., Washington, D.C. 20005. Further examples of such additives may be found in U.S. Pat. No. 5,371,148.

Examples of flattening agents include, but are not limited to, synthetic silica, available from the Davison Chemical Division of W. R. Grace & Company as SYLOID.; polypropylene, available from Hercules Inc., as HERCOFLAT; synthetic silicate, available from J. M. Huber Corporation, as ZEOLEX.

Examples of viscosity, suspension, and flow control agents include, but are not limited to, polyaminoamide phosphate, high molecular weight carboxylic acid salts of polyamine amides, and alkylene amine salts of an unsaturated fatty acid, all available from BYK Chemie U.S.A. as ANTI TERRA. Further examples include, but are not limited to, polysiloxane copolymers, polyacrylate solution, cellulose esters, hydroxyethyl cellulose, hydroxypropyl cellulose, polyamide wax, polyolefin wax, hydroxypropyl methyl cellulose, polyethylene oxide, and the like.

Where formulated as a coating, the inventive compositions may be applied to various substrates including, but not limited to, metals (e.g. aluminum, steel), plastics, ceramics, glass, natural materials, and concrete. The substrates may optionally be cleaned prior to coating to remove processing oils or other contaminants. The substrates may also be pretreated to improve adhesion and corrosion resistance. Additionally, a primer may be applied first to the substrate followed by application of the coating of the invention. Alternatively, the coating of the invention can be applied to the substrate first, followed by a topcoat of another or similar material.

The compositions of the invention may be contacted with a substrate by any methods known to those skilled in the art, including but not limited to, spraying, dipping, flow coating, rolling, brushing, pouring, squeegeeing, and the like. In some embodiments, the inventive compositions may be applied in the form of paints or lacquers onto any compatible substrate. In certain embodiments, the inventive composition is applied as a single layer. In other embodiments, the composition of the present invention may be applied as multiple layers as needed.

### EXAMPLES

The non-limiting and non-exhaustive examples that follow are intended to further describe various non-limiting and non-exhaustive embodiments without restricting the scope of the embodiments described in this specification. All quantities given in "percents" are understood to be by weight, unless otherwise indicated. For the purpose of mass to mole conversions, reagents with purity of 99% or higher are considered to be 100% pure.

Although described herein in the context of a coating, those skilled in the art will recognize that the principles of the present invention are equally applicable to adhesives, sealants, films, elastomers, castings, foams, and composites.

The following materials were used in preparation of the Examples:
- POLYISO A: an aliphatic isocyanate based on hexamethylene diisocyanate (HDI), commercially available from Covestro LLC (Pittsburgh, PA) as DESMODUR H (49.7% NCO);
- POLYISO B: an allophanate-modified polyisocyanate based on hexamethylene diisocyanate (HDI), commercially available from Covestro LLC (Pittsburgh, PA) as DESMODUR XP 2580 (19.3% NCO);
- ALLYL ETHER A: trimethylolpropane diallyl ether, commercially available from Perstorp Holding AB, Sweden as TMPDE 90;
- ALLYL ETHER B: ethylene glycol allyl ether (EGAE), commercially available from Sigma-Aldrich;
- CATALYST A: dibutyltin dilaurate 95% (DBTDL), one drop is ~ 20-30 mg, commercially available from Sigma-Aldrich;
- OXIDANT A: potassium peroxysulfate, commercially available from Alfa Aesar as OXONE;
- CROSSLINKER A: para-aminocyclohexyl methane (PACM) commercially available from Evonik;
- BASE A: sodium hydrogen carbonate, commercially available from Alfa Aesar;
- SOLVENT A: acetone, commercially available from Alfa Aesar;
- SOLVENT B: dichloromethane, commercially available from Alfa Aesar;
- SOLVENT C: ethyl acetate, commercially available from Alfa Aesar;
- DI water: de-ionized water;
- MEK: methyl ethyl ketone, commercially available from VWR International;
- BRINE: saturated aqueous solution of NaCl, prepared by dissolving 500 g NaCl (certified ACS, Sigma-Aldrich) into 1 L of DI water at room temperature.

The following methods are used in the examples for the characterization of the compounds synthesized and materials prepared in the Examples. FTIR measurements were made using a THERMO NICOLET 8700 FTIR spectrometer. Spectra acquisitions were based on 64 scans with data spacing of 4.0 cm⁻¹ in the range of 4000-500 cm⁻¹. NMR measurements were made at 25 °C using a BRUKER AVANCE 400 MHz instrument and processed with TOPSPIN software. All measurements used CDCl₃ as solvent. The bulk viscosity of samples was measured using an ARES Rheometer at room temperature. Epoxide equivalent weight (EEW, g/eq) of the epoxy products was determined by epoxy titration according to ASTM D1652-11 (2019). Impact tests were measured according to ASTM D2794-93 (2019) using a BYK-Gardner Heavy Duty Impact Tester Model IG-1120, which a 1.8 kg (4 lb.) mass and 1.27 cm (0.5 inch) diameter round-nose punch. MEK double rubs of the cured film was in accordance with ASTM D5402-19. Coatings that passed 400 double rubs without mar were considered fully cured. The film thickness was measured with a BYKO-test 8500. König pendulum hardness and pencil hardness were measured according to ASTM D4366-16 (2021) and ASTM D3363-20, respectively. The adhesion of coatings on steel substrate was evaluated according to crosshatch adhesion ASTM D3359-17.

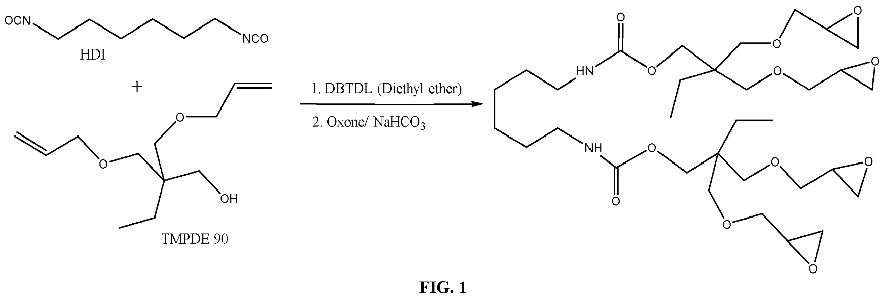

### Example 1 - Synthesis of POLYISO A-EPOXY A RESIN FIG. 1)

A mixture containing ALLYL ETHER A (47.6g, 0.22 mol) and two drops of CATALYST A was stirred at room temperature. POLYISO A (16.8g, 0.1 mol) was added dropwise. After completion of the dropwise addition, the reaction solution was stirred at room temperature overnight. Infrared spectroscopic analysis was performed to determine reaction completion by monitoring the disappearance of the isocyanate peak at 2275 cm⁻¹. The resulting POLYISO A-ALLYL ETHER A CARBAMATE was directly used for the next step without purification.

¹H NMR (400 MHz) δ 5.88 - 5.64 (m, 4H), 5.13 (dt, J = 17.2, 3.0 Hz, 4H), 5.02 (d, J = 10.6 Hz, 4H), 4.90 (s, 1H), 3.90 (s, 4H), 3.86 - 3.74 (m, 8H), 3.21 (d, J = 5.1 Hz, 7H), 3.03 (dd, J = 12.7, 6.3 Hz, 4H), 1.92 (d, J = 3.5 Hz, 2H), 1.49 - 1.17 (m, 12H), 0.74 (td, J = 7.4, 4.3 Hz, 6H).

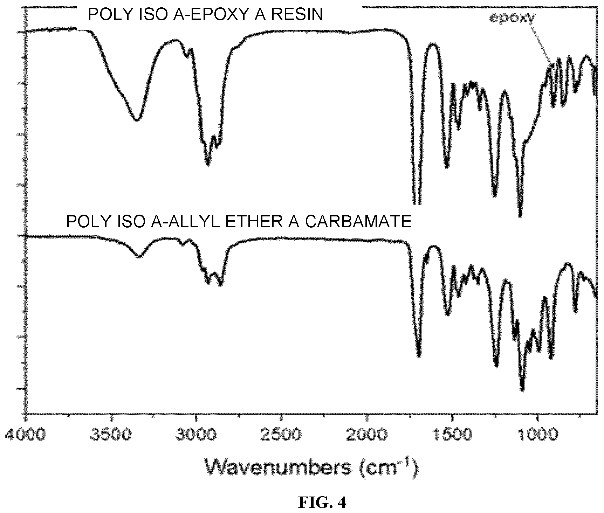

¹³C NMR (400 MHz) δ 156.75 135.10, 134.73, 116.69, 116.44, 72.58, 72.36, 72.21, 70.35, 66.97, 65.03, 42.48, 40.77, 29.92, 26.28, 23.04, 22.88, 7.61. (FIG. 4, upper panel, is the ¹³C NMR spectrum of the POLYISO A-ALLYL ETHER A CARBAMATE intermediate).

ATR-FTIR (neat) 3334, 2932, 2859, 1695, 1646, 1527, 1463, 1420, 1350, 1240, 1135, 1089, 1045, 992, 920, 778 cm⁻¹. FIG. 4, lower panel, is the ATR-FTIR spectrum of the POLYISO A-ALLYL ETHER A CARBAMATE intermediate.

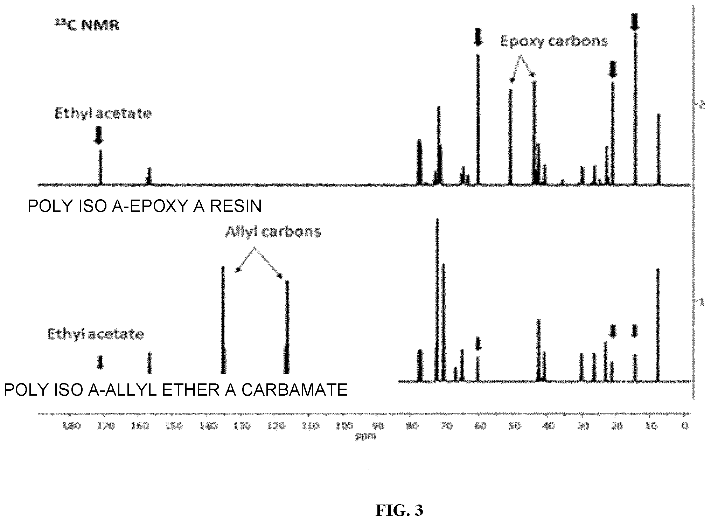

The solution of the POLYISO A-ALLYL ETHER A CARBAMATE (17.3838g 0.029 mol) in SOLVENT A (150mL) was transferred to a 1000 mL three-neck, round bottom flask equipped with a mechanical stirring apparatus. BASE A (50g, 0.595 mol) was added at once. An aqueous solution which contained OXIDANT A (120 g/450 mL) was added dropwise at a flowrate of 0.5~1 mL min⁻¹ using a pump at room temperature. After dropwise addition, the reaction solution was stirred at room temperature for another two hours. The reaction mixture was liquid-liquid extracted with SOLVENT C (3 x 150 mL). The organic layer was separated, washed with DI water and BRINE, and evaporated. The carbon-carbon double bond conversion was about 100% (analyzed by ¹³C NMR spectroscopy, FIG. 3) and the yield was about 90%.

¹H NMR (400 MHz) δ 3.82 - 3.71 (m, 3H), 3.59 - 3.43 (m, 4H), 3.42 - 3.02 (m, 15H), 3.00 - 2.77 (m, 8H), 2.56 (dt, J = 9.3, 4.7 Hz, 4H), 2.38 (ddd, J = 7.7, 5.0, 2.7 Hz, 4H), 1.33 - 1.07 (m, 12H), 0.71 - 0.59 (m, 6H).

¹³C NMR (400 MHz) δ 157.24, 156.71, 71.86, 71.70, 71.21, 50.81, 43.88, 43.82, 42.56, 40.67, 29.75, 26.18, 22.61, 7.44, 7.31. (FIG. 3, upper panel is the ¹³C NMR spectrum of the POLYISOCYANATE A-EPOXY A RESIN).

FTIR (neat) 3349, 3056, 2933, 2881, 1702, 1532, 1464, 1414, 1338, 1251, 1101, 908, 853, 778, 668. FIG. 4, upper panel is the FTIR spectrum of the POLYISO A-EPOXY A RESIN.

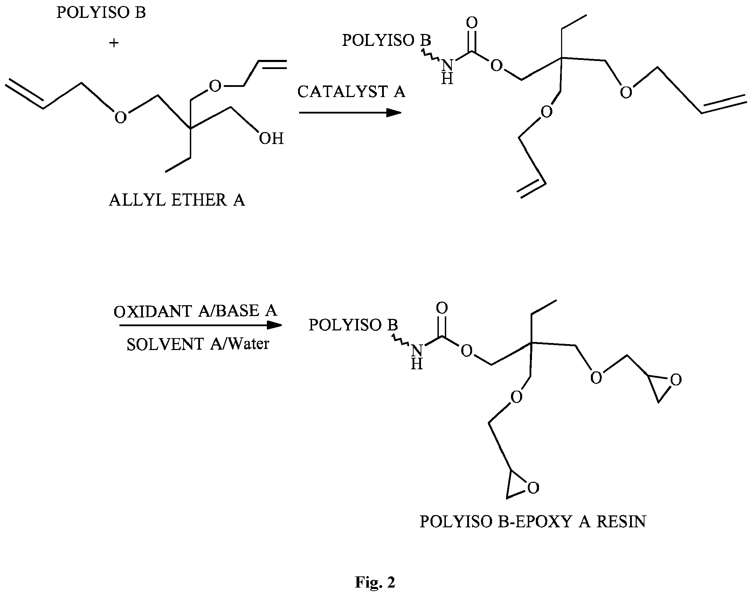

### Example 2 - Synthesis of POLYISO B-EPOXY A RESIN (FIG. 2)

A mixture containing ALLYL ETHER A (22g, 92.3 mmol) and two drops of CATALYST A was stirred at room temperature. POLYISO B (20g, 92.3 mmol) was added dropwise. After completion of the dropwise addition, the reaction solution was stirred at room temperature overnight. Infrared spectroscopic analysis was performed to determine reaction completion by monitoring the disappearance of the isocyanate peak at 2275 cm⁻¹. The resulting POLYISO B-ALLYL ETHER A CARBAMATE was directly used for the next step without purification.

¹H NMR (400 MHz, ) δ 5.66 (ddd, J = 11.8, 7.8, 4.6 Hz, 2H), 5.14 - 4.83 (m, 5H), 3.94 (tt, J = 17.3, 5.5 Hz, 1H), 3.81 (s, 2H), 3.77 - 3.69 (m, 4H), 3.66 (s, 2H), 3.12 (d, J = 4.2 Hz, 4H), 2.91 (dd, J = 17.5, 5.9 Hz, 2H), 1.57 - 1.06 (m, 12H), 0.78 (d, J = 8.7 Hz, 1H), 0.65 (td, J = 7.5, 3.7 Hz, 3H).

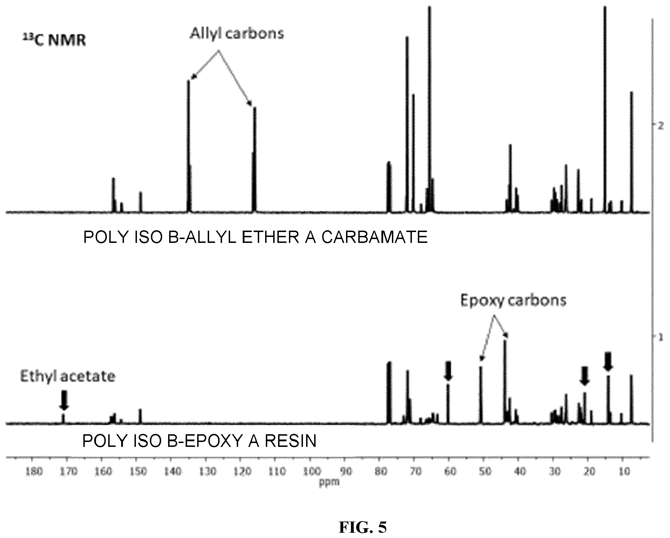

¹³C NMR (400 MHz, ) δ 156.63, 156.19, 154.31, 148.83, 135.01, 134.70, 116.35, 115.97, 72.24, 72.22, 72.08, 70.25, 65.67, 42.39, 26.28, 26.16, 22.87, 22.78, 15.12, 7.46. (FIG. 5, upper panel, shows the ¹³C NMR spectrum of the POLYISO B-ALLYL ETHER A CARBAMATE intermediate).

The solution of the POLYISO B-ALLYL ETHER A CARBAMATE in SOLVENT A (150mL) was transferred to a 1000 mL three-neck, round bottom flask equipped with a mechanical stirring apparatus. BASE A (32 g) was added. An aqueous solution of OXIDANT A (120 g/450 mL)) was added dropwise at a flowrate of 0.5~1 mL min⁻¹ using a pump at room temperature. After dropwise addition, the reaction solution was stirred at room temperature for another two hours. The reaction mixture was liquid-liquid extracted with SOLVENT C (3 x 150 mL). The organic layer was separated, washed with DI water and BRINE, and evaporated. The carbon-carbon double bond conversion was about 100% (analyzed by ¹³C NMR spectroscopy, FIG. 5) and the yield was about 90%. The viscosity of the resulting POLYISO B-EPOXY A RESIN was 31757 m Pa·s.

¹H NMR (400 MHz) δ 3.80 (s, 2H), 3.66 (d, J = 3.6 Hz, 2H), 3.60 - 3.45 (m, 3H), 3.19 (ddd, J = 11.6, 7.8, 5.6 Hz, 8H), 2.94 (dd, J = 5.4, 2.5 Hz, 4H), 2.67 - 2.51 (m, 2H), 2.40 (dd, J = 5.0, 2.7 Hz, 2H), 1.23 (dd, J = 33.0, 25.9 Hz, 17H), 0.67 (d, J = 5.3 Hz, 3H).

¹³C NMR (400 MHz) δ 157.23, 156.67, 156.23, 154.36, 148.93, 71.89, 71.70, 71.25, 50.82, 43.91, 43.86, 43.07, 42.59, 40.75, 30.52, 29.69, 29.40, 27.59, 26.23, 22.65, 22.14, 21.90, 7.45, 7.32. (FIG. 5, lower panel is the ¹³C NMR spectrum of the POLYISOCYANATE B-EPOXY A RESIN).

### Example 3 - Synthesis of POLYISO B-EPOXY A resin (larger batch)

A mixture containing ALLYL ETHER A (83.6 g, 0.39 mol) and five drops of CATALYST A was stirred at room temperature. POLYISO B (75 g, 0.349 mol) was added dropwise. After completion of the dropwise addition, the reaction solution was stirred at room temperature overnight. Infrared spectroscopic analysis was performed to determine reaction completion by monitoring the disappearance of the isocyanate peak at 2275 cm⁻¹. The resulting POLYISO B-ALLYL ETHER A CARBAMATE was directly used for next step without purification.

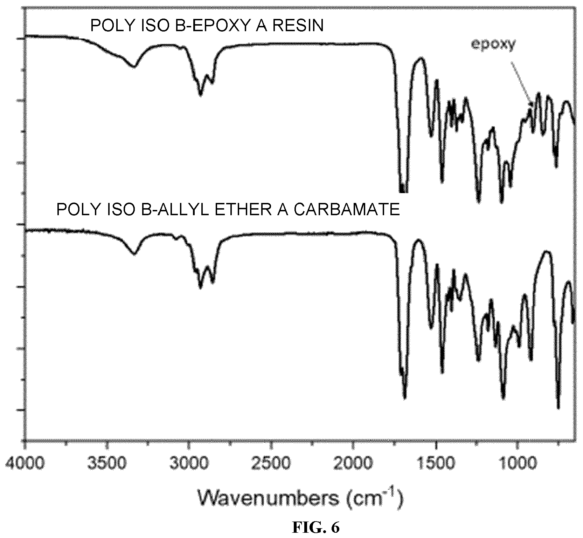

ATR-FTIR (neat) 3335, 2933, 2859, 1712, 1689, 1530, 1461, 1404, 1351, 1240, 1181, 1135, 1088, 991, 920, 752, 665cm⁻¹. FIG. 6, lower panel, is the ATR-FTIR spectrum of the POLYISO B-ALLYL ETHER A CARBAMATE intermediate.

The solution of the POLYISO B-ALLYL ETHER A CARBAMATE in SOLVENT A (650mL) was transferred to a 5000 mL three-neck, round bottom flask equipped with a mechanical stirring apparatus. BASE A (371 g) was added. An aqueous solution of OXIDANT A (905 g/3.5 L) was added dropwise at a flowrate of 1-2 mL min⁻¹ using a pump at room temperature. After dropwise addition, the reaction solution was stirred at room temperature for another two hours. The reaction mixture was liquid-liquid extracted with SOLVENT C (3 x 650 mL). The organic layer was separated, washed with BRINE (3 x 200 mL) and evaporated. The carbon-carbon double bond conversion was about 100% (analyzed by ¹³C NMR spectroscopy) and the yield was close to 100%. The viscosity of the resulting POLYISO B-EPOXY A RESIN was 41826 mPa·s.

¹H NMR (400 MHz) δ 3.88 (dd, J = 11.0, 4.9 Hz, 2H), 3.72 (s, 2H), 3.66 - 3.51 (m, 3H), 3.39 - 3.08 (m, 8H), 2.99 (dd, J = 7.5, 4.4 Hz, 4H), 2.72 - 2.57 (m, 2H), 2.52 - 2.39 (m, 2H), 1.67 - 1.14 (m, 17H), 0.74 (m 3H).

¹³C NMR (400 MHz) δ 157.27, 156.71, 156.32, 154.45, 148.96, 71.94, 71.34, 50.95, 44.01, 42.64, 27.66, 26.23, 22.71, 7.55, 7.41.

ATR-FTIR (neat) 3337, 2933, 2859, 1711, 1686, 1529, 1463, 1404, 1373, 1338, 1239, 1182, 1098, 1044, 908, 848, 778, 765. FIG. 6, upper panel, is the ATR-FTIR spectrum of the POLYISO B-EPOXY A RESIN.

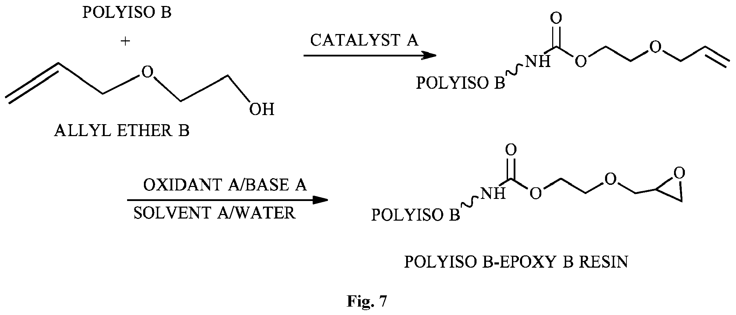

### Example 4 - Synthesis of POLYISO B-EPOXY B resin (FIG. 7)

A mixture containing ALLYL ETHER B (10.213g, 0.1 mol) and two drops of CATALYST A was stirred at room temperature. POLYISO B (21.5 g, 0.1 mol) was added dropwise (some chloroform was added to transfer all POLYISO B into the reaction flask). After completion of the dropwise addition, the reaction solution was stirred at room temperature overnight. Infrared spectroscopic analysis was performed to determine reaction completion by monitoring the disappearance of the isocyanate peak at 2275 cm⁻¹.The resulting POLYISO B-ALLYL ETHER B CARBAMATE was directly used for the next step without purification.

¹H NMR (400 MHz) δ 5.77 (ddd, J = 22.8, 10.8, 5.7 Hz, 1H), 5.15 (dd, J = 17.3, 1.6 Hz, 1H), 5.06 (dd, J = 10.4, 1.3 Hz, 1H), 5.04 - 4.82 (m, 1H), 4.19 - 4.05 (m, 2H), 4.05 - 3.97 (m, 1H), 3.90 (dd, J = 7.8, 3.7 Hz, 2H), 3.73 (t, J = 7.2 Hz, 1H), 3.60 (dt, J = 14.6, 6.1 Hz, 1H), 3.54 - 3.46 (m, 2H), 3.44 (dd, J = 6.3, 3.1 Hz, 0H), 3.13 (dd, J = 12.5, 6.7 Hz, 1H), 3.02 (dd, J = 13.0, 6.5 Hz, 2H), 1.71 - 1.32 (m, 6H), 1.30 - 1.07 (m, 6H), 0.94 - 0.72 (m, 1H).

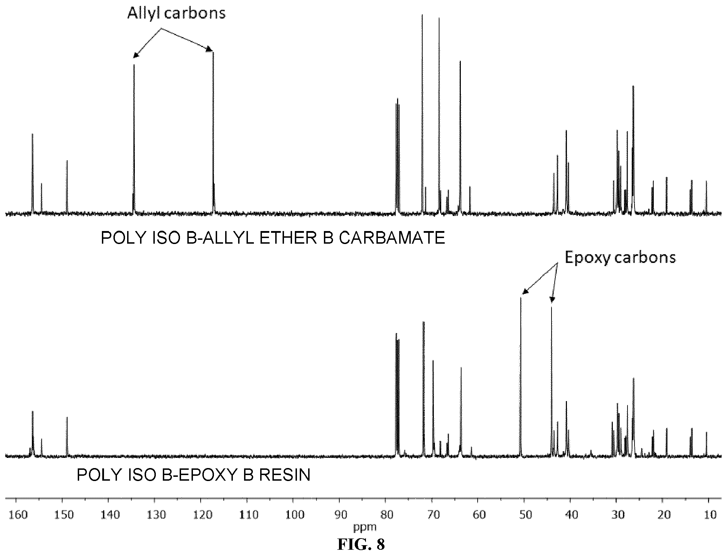

¹³C NMR (400 MHz) δ 156.44, 156.34, 154.45, 148.96, 134.64, 134.47, 117.32, 117.12, 72.03, 71.37, 68.40, 68.16, 66.69, 66.41, 63.80, 61.68, 43.57, 42.79, 40.85, 40.81, 40.36, 30.59, 29.80, 29.75, 29.47, 29.03, 28.25, 28.04, 27.67, 26.54, 26.36, 26.27, 26.22, 22.22, 21.99, 19.13, 13.99, 13.66, 10.47. (FIG. 8, upper panel, is the spectrum of the POLYISO B-ALLYL ETHER B CARBAMATE).

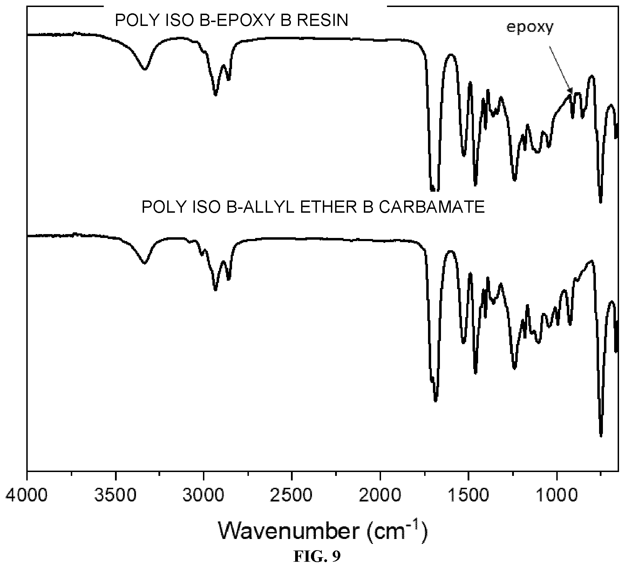

ATR-FTIR (cm⁻¹ ) 3335, 2934, 2859, 1686, 1530, 1461, 1404, 1358, 1241, 1181, 1103, 1044, 994, 926, 749, 665. FIG. 9, lower panel, is the ATR-FTIR spectrum of the POLYISO B-ALLYL ETHER B CARBAMATE.

The solution of the POLYISO B-ALLYL ETHER B CARBAMATE in acetone (0.1 mol/150 mL) was transferred to a 1000 mL three-neck, round bottom flask equipped with a mechanic stirring apparatus. BASE A (50.4g, 0.6 mol) was added at once. An aqueous solution of OXIDANT A (123 g/600 mL) (0.4 mol) was added dropwise at a flowrate of 0.5~1 mL min⁻¹ using a pump at room temperature. After dropwise addition, the reaction solution was stirred at room temperature for another two hours. The reaction mixture was liquid-liquid extracted with SOLVENT B (3 x 100 mL). The organic layer was separated, washed with DI water and BRINE, and evaporated. The carbon-carbon double bond conversion was about 100% (analyzed by ¹³C NMR spectroscopy, FIG. 8) and the yield was about 90%.

¹H NMR (400 MHz) δ 5.11 (d, J = 6.4 Hz, 1H), 4.20 - 4.02 (m, 2H), 4.01 - 3.89 (m, 1H), 3.68 (d, J = 6.4 Hz, 1H), 3.65 (dd, J = 11.7, 2.8 Hz, 1H), 3.61 - 3.43 (m, 2H), 3.23 (dt, J = 11.6, 5.8 Hz, 1H), 3.10 (dd, J = 12.3, 6.4 Hz, 1H), 3.04 - 2.87 (m, 2H), 2.64 (t, J = 4.6 Hz, 1H), 2.45 (dd, J = 4.9, 2.7 Hz, 1H), 1.67 - 1.29 (m, 5H), 1.32 - 1.05 (m, 5H), 0.80 (ddd, J = 24.2, 13.2, 7.3 Hz, 1H).

¹³C NMR (400 MHz) δ 156.96, 156.42, 156.30, 154.45, 148.96, 71.76, 69.70, 69.47, 68.15, 66.68, 66.40, 63.84, 63.61, 61.37, 50.74, 44.08, 44.02, 43.55, 42.76, 40.82, 40.33, 30.89, 30.55, 29.74, 29.68, 29.43, 28.99, 28.20, 28.00, 27.63, 26.50, 26.32, 26.24, 22.18, 21.95, 19.10, 13.96, 13.64, 10.44. (FIG. 8, lower panel, is the ¹³C NMR spectrum of the POLYISO B-EPOXY B RESIN).

ATR-FTIR (cm⁻¹) 3335, 2933, 2860, 1684, 1528, 1462, 1404, 1360, 1240, 1181, 1105, 1046, 911, 855, 751, 665. FIG. 9, upper panel is the ATR-FTIR spectrum of the POLYISO B-EPOXY B RESIN.

### Coating preparation and evaluation

The POLYISO B-EPOXY A resin from Example 2 was mixed with CROSSLINKER A at three equivalent epoxy groups to NH groups ratios (1:1, 1:1.5, and 1:2, respectively) without using any solvent. The coating formulations were applied onto iron phosphate pretreated 22-gauge steel test panels purchased from Q-panel. Coating application was made using a drawdown bar for a final dry film thickness of approximately 80 µm. Coated panels were cured at room temperature or placed in an oven at 80 °C as noted. The coatings were evaluated for physical properties and the results are provided in Table I.

**Table I**

| | **Ratio of epoxy groups to NH groups** | | | | | |
|---|---|---|---|---|---|---|
| | **1:1** | | **1:1.5** | | **1:2** | |
| **Cure conditions** | **RT** | **HT** | **RT** | **HT** | **RT** | **HT** |
| Pencil hardness | H | 2H | 2H | 2H | H | 2H |
| Crosshatch | 5B | 5B | 5B | 5B | 5B | 5B |
| Thickness (µm) | 120 | 121 | 141 | 110 | 55 | 103 |
| MEK double rubs | >400 | 200 | 320 | >400 | >400 | >400 |
| Konig Hardness (s) | 46 | 72 | 109 | 151 | 152 | 173 |
| Impact (inch-lb.) | 108 | 112 | 120 | 140 | 172 | 172 |

| | | | | | | |
|---|---|---|---|---|---|---|
| RT: cured at room temperature for 3 days; HT: cured at 80 °C for 45 minutes | | | | | | |

### Coating preparation and evaluation by self-curing

The POLYISO B-EPOXY A resin from Ex. 2 was applied onto iron phosphate pretreated 22-gauge steel test panels purchased from Q-panel. Coating application was made using a drawdown bar for a final dry film thickness of approximately 70 µm. coated panels were placed in an oven at 150 °C for six hours. The POLYISO B-EPOXY A resin was cured at 150 °C for one hour. Results from the are presented in Table II.

**Table II**

| **Tes**t | **Result** |
|---|---|
| Pencil hardness | 4B |
| Crosshatch | 5B |
| Thickness (µm) | 47 |
| MEK double rubs | 5 |
| Konig Hardness (s) | 10 |
| Impact (inch-lb.) | 172 |

This specification has been written with reference to various non-limiting and non-exhaustive embodiments. However, it will be recognized by persons having ordinary skill in the art that various substitutions, modifications, or combinations of any of the disclosed embodiments (or portions thereof) may be made within the scope of this specification. Thus, it is contemplated and understood that this specification supports additional embodiments not expressly set forth herein. Such embodiments may be obtained, for example, by combining, modifying, or reorganizing any of the disclosed steps, components, elements, features, aspects, characteristics, limitations, and the like, of the various non-limiting embodiments described in this specification. In this manner, Applicant reserves the right to amend the claims during prosecution to add features as variously described in this specification, and such amendments comply with the requirements of 35 U.S.C. §112(a), and 35 U.S.C. §132(a).

Various aspects of the subject matter described herein are set out in the following numbered clauses:
Clause 1. An epoxy-functional polyurethane comprising a reaction product of (A) a polyisocyanate; and (B) a compound: HX-Y-(Z)ₙ wherein, X is O, N, or S, Y is a linear or branched C₁-C₁₅ alkyl group, and Z is -CH=CDE or Z is -F-O-G-CH=CDE, n is an integer from 1 to 3, wherein D and E independently are selected from H, a linear C₁-C₅ alkyl group, and a branched C₁-C₅ alkyl group, F and G independently are selected from H, linear or branched C₁-C₁₅ alkyl groups, and wherein compound (B) comprises a vinyl group capable of being oxidized to a corresponding epoxy group.
Clause 2. The epoxy-functional polyurethane according to Clause 1, wherein the polyisocyanate (A) is selected from the group consisting of 1,4-tetramethylene diisocyanate, 1,6-hexamethylene diisocyanate, 2,2,4-trimethyl-1,6-hexamethylene diisocyanate, 2,4,4-trimethyl-1,6-hexamethylene diisocyanate, 1,12-dodecamethylene diisocyanate, cyclohexane-1,3-diisocyanate, cyclohexane-1,4-diisocyanate, 1-isocyanato-2-isocyanato-methyl cyclopentane, 1-isocyanato-3,3,5-trimethyl-5-isocyanato-methylcyclohexane, bis-(4-isocyanatocyclohexyl)methane, 1,3-bis(isocyanatomethyl)-cyclohexane, 1,4-bis(isocyanatomethyl)-cyclohexane, bis-(4-isocyanato-3-methyl-cyclohexyl)-methane, α,α,α',α'-tetramethyl-1,3-xylene diisocyanate, α,α,α',α'-tetramethy-1,4-xylene diisocyanate, 1-isocyanato-1-methyl-4(3)-isocyanato-methyl cyclohexane, 2,4-hexahydrotoluene diisocyanate, 2,6-hexahydrotoluene diisocyanate, toluene diisocyanate, diphenylmethane diisocyanate, pentane diisocyanate, isomers of any of these, and mixtures of any of these.
Clause 3. The epoxy-functional polyurethane according to one of Clauses 1 and 2, wherein (B) is selected from the group consisting of trimethylolpropane diallyl ether, ethylene glycol monoallyl ether, 3-butene-1-ol, 4-pentene-1-ol, 4-methyl-3-pentene-1-ol, 5-hexene-1-ol, 4-hexene-1-ol, 3-hexene-1-ol, 4-methyl-3-hexene-1-ol, 2-ethyl-4-pentene-1-ol, oleyl alcohol, and mixtures of any of these.
Clause 4. One of a coating, an adhesive, a sealant, a film, an elastomer, a casting, a foam, and a composite comprising the epoxy-functional polyurethane according to any one of Clauses 1 to 3.
Clause 5. A curable coating formulation comprising the epoxy-functional polyurethane according to any one of Clauses 1 to 3 and a curing agent reactive with epoxy groups.
Clause 6. The curable coating formulation according to Clause 5, wherein the curing agent is an amine-functional curing agent.
Clause 7. The curable coating formulation according to one of Clauses 5 and 6, wherein the curing agent is selected from the group consisting of PACM (bis(para-aminocyclohexyl)methane), diethylene triamine (DETA), 4,4'-methylene dianiline (MDA), and mixtures of any of these.
Clause 8. A process for producing an epoxy-functional polyurethane, the process comprising (1) reacting (A) a polyisocyanate; and (B) a compound: HX-Y-(Z)ₙ wherein, X is O, N, or S, Y is a linear or branched C₁-C₁₅ alkyl group, and Z is -CH=CDE or Z is -F-O-G-CH=CDE, n is an integer from 1 to 3, wherein D and E independently are selected from H, a linear C₁-C₅ alkyl group, and a branched C₁-C₅ alkyl group, F and G independently are selected from H, linear or branched C₁-C₁₅ alkyl groups, optionally, in the presence of a catalyst to form a vinyl-functional carbamate; (2) forming a mixture containing the vinyl-functional carbamate, a ketone, water, and a base; and (3) feeding an aqueous solution of oxone into the mixture to oxidize the vinyl-functional carbamate to the epoxy-functional polyurethane.
Clause 9. The process according to Clause 8, wherein the polyisocyanate (A) is selected from the group consisting of 1,4-tetramethylene diisocyanate, 1,6-hexamethylene diisocyanate, 2,2,4-trimethyl-1,6-hexamethylene diisocyanate, 2,4,4-trimethyl-1,6-hexamethylene diisocyanate, 1,12-dodecamethylene diisocyanate, cyclohexane-1,3-diisocyanate, cyclohexane-1,4-diisocyanate, 1-isocyanato-2-isocyanato-methyl cyclopentane, 1-isocyanato-3,3,5-trimethyl-5-isocyanato-methylcyclohexane, bis-(4-isocyanatocyclohexyl)methane, 1,3-bis(isocyanatomethyl)-cyclohexane, 1,4-bis(isocyanatomethyl)-cyclohexane, bis-(4-isocyanato-3-methyl-cyclohexyl)-methane, α,α,α',α'-tetramethyl-1,3-xylene diisocyanate, α,α,α',α'-tetramethy-1,4-xylene diisocyanate, 1-isocyanato-1-methyl-4(3)-isocyanato-methyl cyclohexane, 2,4-hexahydrotoluene diisocyanate, 2,6-hexahydrotoluene diisocyanate, toluene diisocyanate, diphenylmethane diisocyanate, pentane diisocyanate, isomers of any of these, and mixtures of any of these.
Clause 10. The process according to one of Clauses 8 and 9, wherein (B) is selected from the group consisting of trimethylolpropane diallyl ether, ethylene glycol monoallyl ether, 3-butene-1-ol, 4-pentene-1-ol, 4-methyl-3-pentene-1-ol, 5-hexene-1-ol, 4-hexene-1-ol, 3-hexene-1-ol, 4-methyl-3-hexene-1-ol, 2-ethyl-4-pentene-1-ol, oleyl alcohol, and mixtures of any of these.
Clause 11. The process according to any one of Clauses 8 to 10, wherein the catalyst is selected from the group consisting of dibutyl tin dilaurate, dibutyl tin diacetate, 1,4-diazabicyclo[2.2.2]octane, and mixtures of any of these.
Clause 12. The process according to any one of Clauses 8 to 11, wherein the base is selected from the group consisting of sodium hydrogen carbonate, sodium hydroxide, sodium carbonate, potassium bicarbonate, potassium carbonate, and potassium hydroxide, and mixtures of any of these.
Clause 13. The process according to any one of Clauses 8 to 12, wherein the ketone is selected from the group consisting of acetone, methyl ethyl ketone, methyl amyl ketone, and cyclohexanone, and mixtures of any of these.
Clause 14. One of a coating, an adhesive, a sealant, a film, an elastomer, a casting, a foam, and a composite comprising the epoxy-functional polyurethane made according to the process of any one of Clauses 8 to 13.
Clause 15. A curable coating formulation comprising the epoxy-functional polyurethane made according to the process of any one of Clauses 8 to 13 and a curing agent reactive with the epoxy groups.
Clause 16. The curable coating formulation according to Clause 15, wherein the curing agent is an amine-functional curing agent.
Clause 17. The curable coating formulation according to one of Clauses 15 and 16, wherein the curing agent is selected from the group consisting of PACM (bis(para-aminocyclohexyl)methane), diethylene triamine (DETA), 4,4'-methylene dianiline (MDA) and mixtures of any of these.

## Claims

1. An epoxy-functional polyurethane comprising a reaction product of (A) a polyisocyanate; and (B) a compound: HX-Y-(Z)ₙ wherein, X is O, N, or S, Y is a linear or branched C₁-C₁₅ alkyl group, and Z is -CH=CDE or Z is -F-O-G-CH=CDE, n is an integer from 1 to 3, wherein D and E independently are selected from H, a linear C₁-C₅ alkyl group, and a branched C₁-C₅ alkyl group, F and G independently are selected from H, linear or branched C₁-C₁₅ alkyl groups, and wherein compound (B) comprises a vinyl group capable of being oxidized to a corresponding epoxy group.

2. The epoxy-functional polyurethane according to claim 1, wherein the polyisocyanate (A) is selected from the group consisting of 1,4-tetramethylene diisocyanate, 1,6-hexamethylene diisocyanate, 2,2,4-trimethyl-1,6-hexamethylene diisocyanate, 2,4,4-trimethyl-1,6-hexamethylene diisocyanate, 1,12-dodecamethylene diisocyanate, cyclohexane-1,3-diisocyanate, cyclohexane-1,4-diisocyanate, 1-isocyanato-2-isocyanato-methyl cyclopentane, 1-isocyanato-3,3,5-trimethyl-5-isocyanato-methylcyclohexane, bis-(4-isocyanatocyclohexyl)methane, 1,3-bis(isocyanatomethyl)-cyclohexane, 1,4-bis(isocyanatomethyl)-cyclohexane, bis-(4-isocyanato-3-methyl-cyclohexyl)-methane, α,α,α',α'-tetramethyl-1,3-xylene diisocyanate, α,α,α',α'-tetramethy-1,4-xylene diisocyanate, 1-isocyanato-1-methyl-4(3)-isocyanato-methyl cyclohexane, 2,4-hexahydrotoluene diisocyanate, 2,6-hexahydrotoluene diisocyanate, toluene diisocyanate, diphenylmethane diisocyanate, pentane diisocyanate, isomers of any of these, and mixtures of any of these.

3. The epoxy-functional polyurethane according to one of claims 1 and 2, wherein (B) is selected from the group consisting of trimethylolpropane diallyl ether, ethylene glycol monoallyl ether, 3-butene-1-ol, 4-pentene-1-ol, 4-methyl-3-pentene-1-ol, 5-hexene-1-ol, 4-hexene-1-ol, 3-hexene-1-ol, 4-methyl-3-hexene-1-ol, 2-ethyl-4-pentene-1-ol, oleyl alcohol, and mixtures of any of these.

4. One of a coating, an adhesive, a sealant, a film, an elastomer, a casting, a foam, and a composite comprising the epoxy-functional polyurethane according to any one of claims 1 to 3.

5. A curable coating formulation comprising the epoxy-functional polyurethane according to any one of claims 1 to 3 and a curing agent reactive with epoxy groups.

6. The curable coating formulation according to claim 5, wherein the curing agent is an amine-functional curing agent.

7. The curable coating formulation according to one of claims 5 and 6, wherein the curing agent is selected from the group consisting of PACM (bis(para-aminocyclohexyl)methane), diethylene triamine (DETA), 4,4'-methylene dianiline (MDA), and mixtures of any of these.

8. A process for producing an epoxy-functional polyurethane, the process comprising (1) reacting (A) a polyisocyanate; and (B) a compound: HX-Y-(Z)ₙ wherein, X is O, N, or S, Y is a linear or branched C₁-C₁₅ alkyl group, and Z is -CH=CDE or Z is -F-O-G-CH=CDE, n is an integer from 1 to 3, wherein D and E independently are selected from H, a linear C₁-C₅ alkyl group, and a branched C₁-C₅ alkyl group, F and G independently are selected from H, linear or branched C₁-C₁₅ alkyl groups, optionally, in the presence of a catalyst to form a vinyl-functional carbamate; (2) forming a mixture containing the vinyl-functional carbamate, a ketone, water, and a base; and (3) feeding an aqueous solution of oxone into the mixture to oxidize the vinyl-functional carbamate to the epoxy-functional polyurethane.

9. The process according to claim 8, wherein the polyisocyanate (A) is selected from the group consisting of 1,4-tetramethylene diisocyanate, 1,6-hexamethylene diisocyanate, 2,2,4-trimethyl-1,6-hexamethylene diisocyanate, 2,4,4-trimethyl-1,6-hexamethylene diisocyanate, 1,12-dodecamethylene diisocyanate, cyclohexane-1,3-diisocyanate, cyclohexane-1,4-diisocyanate, 1-isocyanato-2-isocyanato-methyl cyclopentane, 1-isocyanato-3,3,5-trimethyl-5-isocyanato-methylcyclohexane, bis-(4-isocyanatocyclohexyl)methane, 1,3-bis(isocyanatomethyl)-cyclohexane, 1,4-bis(isocyanatomethyl)-cyclohexane, bis-(4-isocyanato-3-methyl-cyclohexyl)-methane, α,α,α',α'-tetramethyl-1,3-xylene diisocyanate, α,α,α',α'-tetramethy-1,4-xylene diisocyanate, 1-isocyanato-1-methyl-4(3)-isocyanato-methyl cyclohexane, 2,4-hexahydrotoluene diisocyanate, 2,6-hexahydrotoluene diisocyanate, toluene diisocyanate, diphenylmethane diisocyanate, pentane diisocyanate, isomers of any of these, and mixtures of any of these.

10. The process according to one of claims 8 and 9, wherein (B) is selected from the group consisting of trimethylolpropane diallyl ether, ethylene glycol monoallyl ether, 3-butene-1-ol, 4-pentene-1-ol, 4-methyl-3-pentene-1-ol, 5-hexene-1-ol, 4-hexene-1-ol, 3-hexene-1-ol, 4-methyl-3-hexene-1-ol, 2-ethyl-4-pentene-1-ol, oleyl alcohol, and mixtures of any of these.

11. The process according to any one of claims 8 to 10, wherein the catalyst is selected from the group consisting of dibutyl tin dilaurate, dibutyl tin diacetate, 1,4-diazabicyclo[2.2.2]octane, and mixtures of any of these.

12. The process according to any one of claims 8 to 11, wherein the base is selected from the group consisting of sodium hydrogen carbonate, sodium hydroxide, sodium carbonate, potassium bicarbonate, potassium carbonate, and potassium hydroxide, and mixtures of any of these.

13. The process according to any one of claims 8 to 12, wherein the ketone is selected from the group consisting of acetone, methyl ethyl ketone, methyl amyl ketone, and cyclohexanone, and mixtures of any of these.

14. One of a coating, an adhesive, a sealant, a film, an elastomer, a casting, a foam, and a composite comprising the epoxy-functional polyurethane made according to the process of any one of claims 8 to 13.

15. A curable coating formulation comprising the epoxy-functional polyurethane made according to the process of any one of claims 8 to 13 and a curing agent reactive with the epoxy groups.
